# FASCICULE DE BREVET EUROPEEN

(11) **EP 2 650 638 B1**
(45) Date de publication et mention de la délivrance du brevet: **19.11.2014**
(21) Numéro de dépôt: 12164005.6
(22) Date de dépôt: 12.04.2012
(51) Int. Cl.: G01B 3/20

(54) **Instrument portable de mesure de dimensions**
Tragbares Instrument zum Messen von Abmessungen
Portable instrument for measuring dimensions

(43) Date de publication de la demande: 16.10.2013
(73) Titulaire: TESA SA, 1020 Renens (CH)
(72) Inventeur: Biselx, Frédéric, 1169 Yens (CH)
(74) Mandataire: P&TS SA (AG, Ltd.)

(56) Documents cités:
- EP-A1- 1 094 294
- EP-A1- 1 559 988
- US-A1- 2003 047 009

## Description

### Domaine technique

La présente invention concerne un instrument portable de mesure de dimension, notamment un instrument électronique tel qu'un pied à coulisse, un micromètre, un comparateur, une poignée de mesure, ou n'importe quel instrument de mesure équipé d'un circuit électronique pour la mesure et l'affichage d'une dimension et apte à fonctionner en un milieu industriel sujet à projections de liquides ou de poussières.

### Etat de la technique

Les pieds à coulisse et les autres instruments portables de mesure de dimensions sont utilisés couramment dans les ateliers mécaniques pour mesurer, comparer et vérifier les dimensions des pièces usinées. Ces instruments doivent fournir des mesures précises dans des environnements souvent difficiles, sujets aux projections de liquides de coupe et à un taux important de poussières.

On utilise des normes spécifiques pour quantifier la tolérance de ces instruments envers les conditions environnementales, comme par exemple la norme CE160529 qui groupe les dispositifs électriques et électroniques selon des classes de protection relatives à leur immunité contre les corps étrangers et contre les liquides. L'index de protection P67 caractérise par exemple des dispositifs totalement protégés contre les poussières et les effets de l'immersion jusqu'à un mètre de profondeur.

Ces niveaux de protection sont obtenus, dans la technique connue, par des boîtiers étanches qui entourent les éléments susceptibles aux liquides et aux corps étrangers. Cela est obtenu, par exemple par des joints en caoutchouc, o-rings, des liaisons collés et ainsi de suite. Les boîtiers, Par ailleurs, comportent normalement plusieurs ouvertures pour des boutons, l'affichage, l'accès aux batteries etc. qui offrent des points d'accès potentiel pour les liquides et les corps étrangers. Toutes ces ouvertures doivent être étanchéifiées par des joints ou par des liaisons collées.

La réalisation de fenêtres transparentes pour la lecture de l'affichage présente notamment des difficultés lorsqu'on veut réaliser des instruments étanches. Ces fenêtres sont normalement réalisées par des minces lames en résine transparente collées ou soudées sur le boîtier. La liaison fenêtre-boîtier peut toutefois céder suite à des chocs, des déformations, ou à l'agression répétée des solvants, portant à la perte de l'étancheité.

On utilise de plus en plus, dans les ateliers mécaniques, des instruments de mesure avec une interface de données, capables de transmettre les dimensions mesurées à un ordinateur, une imprimante, ou un autre dispositif pour une élaboration ultérieure ou pour leur stockage. On utilise dans ce domaine des interfaces de transmission de type filaire, par exemple selon les standards RS232, RS422, ou USB, qui sont acceptés par presque tous les équipements et les ordinateurs, mais comportent un connecteur sur le boîtier qu'il faut aussi protéger contre liquides et poussières.

On connait aussi des instruments de mesure portables avec des interfaces de communication sans fils. Cette solution permet l'élimination du connecteur pour les données, mais autorise la communication uniquement avec des dispositifs compatibles avec le protocole utilisé, et augmente la consommation des batteries.

Ces pratiques constructives connues portent à une multiplication des pièces et des étapes d'assemblage de l'instrument. Il y a donc un besoin d'instruments de mesure étanches de construction plus simple et économique.

Les pieds à coulisse et les autres instruments de mesure similaires sont sujets, lors de l'usage en atelier, à des projections de liquides divers, y compris des lubrifiants et des solvants. On a donc la nécessité d'instruments capables de supporter ces substances agressives, et qui peuvent être saisis de façon sure, même lorsqu'ils sont couverts par un film lubrifiant. On a aussi la nécessité d'instruments présentant une résistance aux chocs, inévitables dans l'usage en milieu industriel.

### Bref résumé de l'invention

Un but de la présente invention est de proposer un instrument portable de mesure de dimensions exempt des limitations des instruments connus.

Selon l'invention, ces buts sont atteints notamment au moyen de l'objet de la revendication indépendante.

Dans la suite de la présente description et revendications on fait référence à un pied à coulisse de précision. Il faut comprendre toutefois que cela n'est pas une limitation essentielle de l'invention à ce type d'instrument, on comprend également tout instrument de mesure électronique portable pouvant être équipé tel que mentionné dans la partie caractérisante de la revendication 1, comme par exemple des micromètres, des comparateurs, des poignées de mesure, des sondes, et de manière plus générale, des appareils de mesure électroniques portables.

Lorsque la présente spécification et les revendications mentionnent des piles électriques, il faut aussi comprendre que cela ne représente pas une caractéristique limitative de l'invention, les piles pouvant être remplacées par une source d'alimentation électrique autonome quelconque sans sortir du cadre de l'invention. On peut mentionner, à titre d'exemples non exhaustifs de sources d'alimentation autonomes, des accumulateurs rechargeables, par exemples des batteries LiPO (Lithium-Polymère), Li-ion, Ni-MH, des générateurs transformant l'énergie mécanique en énergie électrique, ou des modules photovoltaïques.

Lorsqu'on utilise, dans la spécification et dans les revendications, les termes 'haut', 'bas', 'inférieur', 'supérieur', 'latéral' et ainsi de suite, il faut comprendre que ces désignations indiquent des directions relatives à l'orientation usuelle et conventionnelle de l'instrument de mesure, posé sur un plan horizontal avec l'écran d'affichage vers le haut.

### Brève description des figures

Des exemples de mise en oeuvre de l'invention sont indiqués dans la description illustrée par les figures annexées dans lesquelles: . La Fig. 1 illustre un pied à coulisse assemblé, selon un aspect de l'invention ; . La Fig. 2 montre le boîtier d'un pied à coulisse selon l'invention séparé en trois éléments ; . La Fig. 3 montre, de manière schématisée, une coupe du boîtier du pied à coulisse de l'invention.

### Exemple(s) de mode de réalisation de l'invention

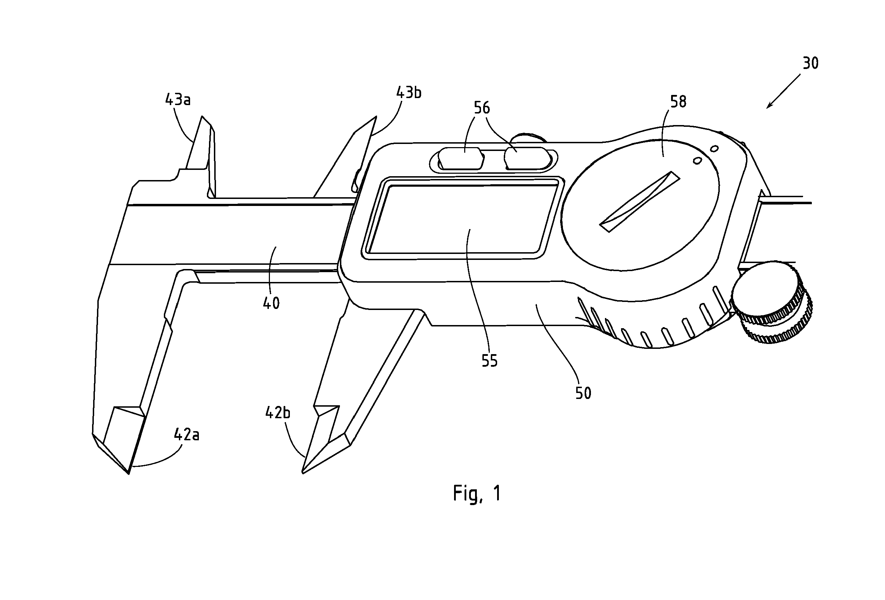

Selon la variante de l'invention illustrée à la Fig. 1 le calibre 30 comporte une perche longitudinale sur laquelle peut se déplacer longitudinalement un coulisseau. La perche peut avoir différentes longueurs selon l'utilisation prévue de l'instrument, par exemple 20 cm, et est munie d'un ou plus becs fixes 42a, 43a, tandis que le coulisseau porte un même nombre de becs mobiles 42b, 43b lesquels se déplacent le long de la perche en restant parallel aux becs fixes.

La perche du pied à coulisse 30 porte une règle qui peut être lue par un capteur se déplaçant avec le coulisseau, afin de déterminer la position relative de ce dernier. On utilise de préférence un capteur sans contact avec la règle 40 tel qu' un capteur magnétique, tandis que la règle 40 comprend un réseau périodique de régions magnétisées avec des polarités alternées, ou une autre disposition de régions magnétiques appropriées. Dans une variante, on peut utiliser un capteur de type inductif, optique ou capacitif avec une règle appropriée.

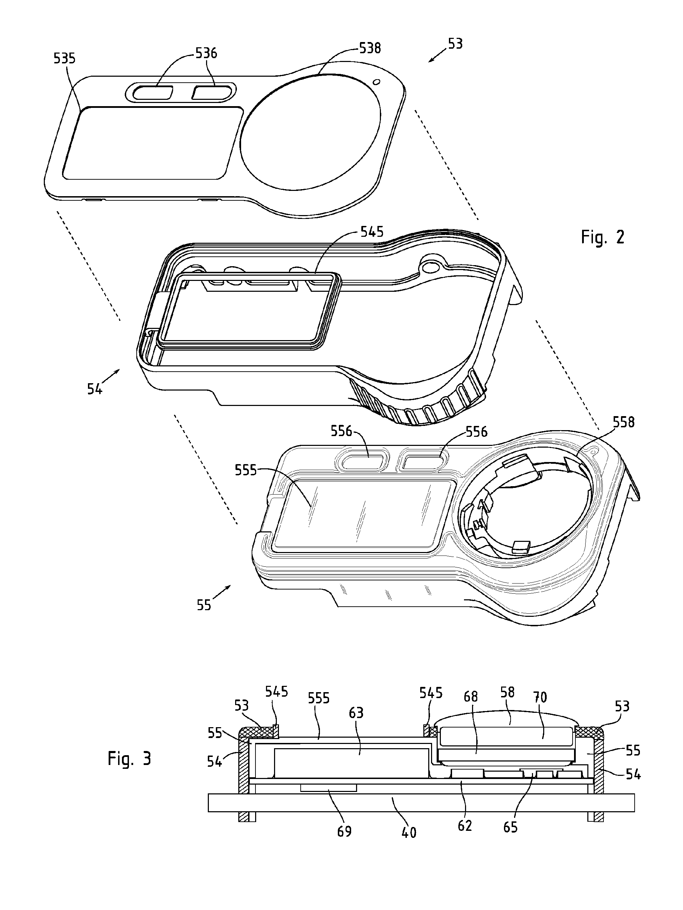

Le boîtier étanche 55 est fixé au coulisseau et comprend, dans son volume interne, un circuit électronique de traitement 65 (visible sur la Fig. 3) arrangé pour lire les signaux provenant du capteur 69 et d'afficher une indication dépendante de la position du capteur 69 relativement à la règle sur le dispositif d'affichage 63, aussi compris dans le volume interne du boîtier étanche 55. Selon un aspect important de l'invention, le boîtier 55 est constitué d'une seule pièce moulée dans un matériau transparent permettant la lecture des moyens d'affichage 63 à son intérieur.

Préférablement, le boîtier 55 couvre l'affichage 63 et le circuit électronique 65 supérieurement, soit dans la direction perpendiculaire à l'écran d'affichage 63 et latéralement. Le volume interne est étanchéifié inférieurement par la plaque de circuit imprimé 62 sur laquelle sont montés l'affichage 63 et les composantes du circuit électronique 65. La plaque 62 est vissée et compresse un joint plat. Elle peut également être collée ou soudée au boîtier 55.

Le capteur de position 69 est représenté dans l'exemple illustré sur la face inférieure du circuit imprimé, donc extérieurement au volume étanche défini par le boîtier 55. Cette disposition permet une proximité étroite entre le capteur 69 et l'échelle 40 qui est bénéfique pour la précision de lecture. Le capteur 69 peut être enrobé en résine ou protégé de l'eau par n'importe quel procédé approprié. Par ailleurs, le montage du capteur 69 sur le même circuit imprimé 62 que le circuit de traitement 65 évite l'utilisation d'un connecteur qui pourrait constituer un point d'accès pour liquides et corps étrangers dans le boîtier étanche 55. On pourrait envisager, toutefois aussi d'intégrer le capteur 69 à l'intérieur du volume étanche, le connectant sur l'autre face du circuit imprimé 62.

Le boîtier 55 peut être réalisé à partir de n'importe quelle substance transparente injectable. Des bonnes caractéristiques mécaniques et de résistance à l'eau et aux solvants sont toutefois désirables. Certaines résines polyamides présentent un niveau de transparence et une dureté élevés alliés à des bonnes qualités de résilience et résistance à la flexion et à la fatigue et peuvent être avantageusement employés en cet aspect de l'invention.

Le boîtier 55 comporte, optionnellement, des ouvertures 556 pour le passage de boutons 56 visibles sur la figure 1, utilisés pour commander des fonctions de l'instrument de mesure, par exemple la mise en marche/arrêt, la remise à zéro ou toute autre fonction nécessaire. Les boutons 55 peuvent être étanchéifiés par des membranes flexibles, ou tout autre procédé approprié. Selon une variante non illustrée, les boutons 56 pourraient être réalisés intégralement avec le boîtier 55, si le matériau employé présente une flexibilité suffisante, évitant ainsi complètement les ouvertures 556.

Le boîtier 55 comprend préférablement aussi une surface plane 555 placée en regard du dispositif d'affichage 63 permettant la lecture de celui-ci sans distorsions ou altérations de l'image. Cette surface plane fait office de fenêtre de lecture et, étant réalisée intégralement avec le boîtier étanche, ne présente pas les inconvénients des fenêtres transparentes collées utilisées dans la technique connue.

Préférablement, le boîtier 55 comprend un logement 558 (visible sur la Fig. 2, pour une source d'alimentation électrique autonome 68, par exemple une pile au Lithium de type bouton assurant l'alimentation électrique au circuit 65. Lorsque l'alimentation est fournie par des piles, leur remplacement est possible par le couvercle 58, visible sur les Fig. 1 et 3, engageable de façon étanche dans le boîtier 55. Préférablement l'engagement étanche du couvercle 58 est obtenu par un accouplement à baïonnette ou à vis équipé d'un joint, car ce système offre une excellente protection, tout en restant démontable avec des outils courants. Dans une variante non-illustrée, le joint peut être intégré à la couche surmoulée 54. D'autres dispositions sont cependant possibles et incluses dans le cadre de la présente invention.

Selon un aspect avantageux de l'invention, le couvercle de piles 58 peut inclure un circuit électronique auxiliaire 70 communiquant avec le circuit de traitement 65 par des connexions électriques non représentées, et permettant d'étendre les fonctions de l'instrument. Cette caractéristique permet d'ajouter des modules électroniques additionnels à l'intérieur du volume interne du boîtier l'instrument sans ajouter des ouvertures et des connecteurs au boîtier étanche 55.

Le circuit électronique auxiliaire 70 peut être par un circuit d'interface radio selon le standard Bluetooth®, HomeRF®, WiFi®, ZigBee®, ou tout autre standard de communication, permettant l'échange de données entre l'instrument 30 et une imprimante, un ordinateur, un téléphone portable, ou tout autre dispositif. Le circuit auxiliaire 70 pourrait aussi inclure une unité de mémoire non volatile, par exemple une mémoire de type E2PROM, ou flash pour le stockage des mesures effectuées, et leur analyse ultérieure, ou une mémoire comprenant des paramètres de mesure. Des variantes et détails ultérieurs concernant le circuit auxiliaire 70 sont inclus dans la demande de Brevet Européen EP11153688.4 au nom de la demanderesse.

Selon un aspect de l'invention, le boîtier 55 est au moins partiellement couvert par des couches fonctionnelles lui apportant des propriétés désirables.

Une couche non transparente 54 peut être utilisée pour cacher de la vue les composantes internes au boîtier qu'on ne désire pas montrer, et pour améliorer les qualités tactiles et visuelles de l'instrument. Le mode de réalisation représenté comporte une couche d'élastomère thermoplastique 54 surmoulée sur le boîtier transparent et couvrant ses côtés. On peut réaliser cette couche par plusieurs matériaux, selon la nature du boîtier 55 et le degré de résistance requis. Dans une variante non illustrée, les boutons 56 peuvent être injectés en même temps que la couche surmoulée 54 et intégrés avec celle-ci, permettent ainsi une parfaite étanchéité des ouvertures 556. Le profil 545 sert à protéger la surface plane 555

Une plaque métallique 53 peut être utilisée pour protéger au moins une partie du boîtier transparent 55 des chocs, et lui conférer un aspect esthétique. Cette plaque comporte, dans l'exemple illustré des ouvertures 535 pour la fenêtre de lecture 555, 536 pour les boutons 56 et 538 pour le logement des piles.

### Numéros de référence employés sur les figures

- 30: instrument de mesure
- 40: règle
- 42a: bec fixe
- 42b: bec coulissant
- 43a: bec fixe
- 43b: bec coulissant
- 50: boîtier assemblé
- 53: plaquette métallique
- 54: surmoulage
- 55: boîtier étanche transparent
- 56: bouton
- 58: bouchon du logement des piles
- 62: circuit imprimé
- 63: dispositif d'affichage
- 65: circuit de traitement
- 68: pile
- 69: capteur de position sans contact
- 70: circuit complémentaire
- 535: ouverture pour l'écran
- 536: ouvertures pour les boutons
- 538: ouverture pour les piles
- 545: profil de protection
- 555: fenêtre d'affichage
- 556: ouvertures pour les boutons
- 558: logement des piles

## Revendications

1. Instrument portable de mesure de dimension (30), comprenant une règle (40), un capteur de position (69) apte à être déplacé en regard de la règle (40) et un boîtier étanche (50, 55) définissant un volume interne dans lequel sont disposés :
des moyens d'affichage électroniques (63);
un circuit de traitement (65) permettant d'afficher sur les moyens d'affichage (63) une indication dépendant de la position du capteur (69) de position relativement à la dite règle (40) ;
dans lequel ledit boîtier (50, 55) comporte une pièce moulée (55) dans un matériau transparent, permettant la lecture des moyens d'affichage et entourant le circuit de traitement et les moyens d'affichage.

2. L'instrument portable de la revendication précédente, dans lequel le capteur de position (69) est à l'intérieur du volume étanche.

3. L'instrument portable de l'une des revendications précédentes, dans lequel le boîtier (50) est au moins partiellement couvert par une couche non-transparente (54) surmoulée.

4. L'instrument portable de l'une des revendications précédentes, dans lequel le boîtier est au moins partiellement protégé par une plaquette métallique (53).

5. L'instrument portable de l'une des revendications précédentes, dans lequel ledit circuit de traitement (65) et/ou lesdits moyens d'affichage (63) et/ou ledit capteur de position (69) sont montés sur une plaque de circuit imprimé fixée au boîtier de manière à étanchéifier ledit volume interne.

6. L'instrument portable de l'une des revendications précédentes, comprenant un logement (558) pour une source d'alimentation électrique remplaçable (68) fermé de manière étanche par un couvercle détachable (58) comprenant un circuit électronique (70).

7. L'instrument portable de la revendication précédente, dans lequel le boîtier (50) est au moins partiellement couvert par une couche non-transparente surmoulée (54) intégrant un joint étanchéifiant ledit couvercle (58) du logement des piles (558).

8. L'instrument portable de l'une des revendications précédentes, dans lequel le capteur de position (69) est un capteur sans contact.

9. L'instrument portable de la revendication précédente, dans lequel ladite règle (40) présente un réseau de régions ayant des caractéristiques magnétiques déterminées et ledit capteur (69) est un capteur sensible au champ magnétique.

10. L'instrument portable de la revendication 8, dans lequel ladite règle (40) présente un réseau de régions ayant des caractéristiques optiques déterminées et ledit capteur (69) est un capteur optique.

11. L'instrument portable de la revendication 8, dans lequel ladite règle (40) présente un réseau de régions ayant des caractéristiques inductives ou capacitives déterminées, et ledit capteur (69) est un capteur inductif ou capacitif.

12. L'instrument portable de l'une des revendications précédentes, dans lequel ledit capteur (69) est sensible à la position linéaire ou angulaire de ladite règle.

13. L'instrument portable de l'une des revendications précédentes, dans lequel le boîtier (50) comporte des ouvertures (536) pour le passage de boutons (56) de commande, et est au moins partiellement couvert par une couche non-transparente surmoulée (54) intégrant lesdits boutons et étanchéifiant lesdites ouvertures.

14. L'instrument portable de l'une des revendications précédentes, constituant un pied à coulisse dans lequel ladite règle est solidaire d'une perche longitudinale dudit pied à coulisse et ledit boîtier est fixé sur un coulisseau arrangé pour glisser longitudinalement le long de la perche.

15. L'instrument portable de l'une des revendications de 1 à 13, constituant un micromètre, dans lequel ladite règle est solidaire d'une touche mobile relativement audit boîtier.

## Patentansprüche

1. Tragbares Instrument zur Messung von Dimensionen (30), mit einem Lineal (40), einem Positionssensor (69), welcher in Bezug auf das Lineal (40) bewegt werden kann, und einem wasserdichten Gehäuse (50, 55), welches ein inneres Volumen definiert, in welchem angeordnet sind:
elektronische Anzeigemittel (63);
eine Verarbeitungsschaltung (65), welche das Anzeigen einer von der Position des Positionssensors (69) in Bezug auf das besagte Lineal (40) abhängigen Angabe auf den Anzeigemitteln (63) ermöglicht;
worin das besagte Gehäuse (50, 55) ein Gussteil (55) aus einem durchsichtigen Material umfasst, welches das Lesen der Anzeigemittel erlaubt und welches die Verarbeitungsschaltung und die Anzeigemittel umringt.

2. Das tragbare Instrument des vorhergehenden Anspruchs, worin der Positionssensor (69) sich innerhalb des wasserdichten Volumens befindet.

3. Das tragbare Instrument eines der vorhergehenden Ansprüche, worin das Gehäuse (50) zumindest teilweise durch eine eingegossene nicht-transparente Schicht (54) bedeckt ist.

4. Das tragbare Instrument eines der vorhergehenden Ansprüche, worin das Gehäuse zumindest teilweise durch eine metallische Platte (53) geschützt ist.

5. Das tragbare Instrument eines der vorhergehenden Ansprüche, worin die besagte Verarbeitungsschaltung (65) und/oder die besagten Anzeigemittel (63) und/oder der besagte Positionssensor (69) auf einer am Gehäuse befestigten gedruckten Leiterplatte angebracht sind, um besagtes inneres Volumen abzudichten.

6. Das tragbare Instrument eines der vorhergehenden Ansprüche, mit einem Fach (558) für eine austauschbare elektrische Stromquelle (69), das mittels eines abnehmbaren Deckels (58) mit einer elektronischen Schaltung (70) wasserdicht geschlossen wird.

7. Das tragbare Instrument des vorhergehenden Anspruchs, worin das Gehäuse (50) mindestens teilweise durch eine eingegossene nicht-transparente Schicht (54) bedeckt ist, welche eine Abdichtung integriert, welche den besagten Deckel (58) des Batteriefachs (558) abdichtet.

8. Das tragbare Instrument eines der vorhergehenden Ansprüche, worin der Positionssensor (69) ein kontaktloser Sensor ist.

9. Das tragbare Instrument des vorhergehenden Anspruchs, worin das besage Lineal (40) ein Netz von Regionen mit bestimmten magnetischen Merkmalen umfasst und worin der besagte Sensor (69) ein auf das Magnetfeld empfindlicher Sensor ist.

10. Das tragbare Instrument von Anspruch 8, worin das besagte Lineal (40) ein Netz von Regionen mit bestimmten optischen Merkmalen umfasst und worin der besagte Sensor (69) ein optischer Sensor ist.

11. Das tragbare Instrument von Anspruch 8, worin das besagte Lineal (40) ein Netz von Regionen mit bestimmten induktiven oder kapazitiven Merkmalen umfasst und worin der besagte Sensor (69) ein induktiver oder kapazitiver Sensor ist.

12. Das tragbare Instrument eines der vorhergehenden Ansprüche, worin der besagte Sensor (69) auf die lineare oder winklige Position des besagten Lineals empfindlich ist.

13. Das tragbare Instrument eines der vorhergehenden Ansprüche, worin das Gehäuse (50) Öffnungen (536) umfasst, um Steuerknöpfe (56) durchzulassen, und worin es zumindest teilweise durch eine eingegossene nicht-transparente Schicht (54) bedeckt ist, welche die besagten Knöpfe integriert und die besagten Öffnungen abdichtet.

14. Das tragbare Instrument eines der vorhergehenden Ansprüche, das eine Schieblehre bildet, worin das besagte Lineal mit einer Längsstange der besagten Schieblehre solidarisch ist, und worin das besagte Gehäuse auf einem Schieber befestigt ist, um längs entlang der Stange zu gleiten.

15. Das tragbare Instrument eines der Ansprüche 1 bis 13, das ein Mikrometer bildet, worin das besagte Lineal mit einer beweglichen Taste solidarisch ist.

## Claims

1. Portable instrument for measuring dimensions (30), comprising a scale (40), a position sensor (69) capable of being moved relative to the scale (40) and a watertight housing (50, 55) defining an internal volume in which are placed:
electronic display means (63);
a processing circuit (65) enabling an indication depending on the position of the position sensor (69) relative to the scale (40) to be displayed on the display means (63);
wherein said housing (50, 55) comprises a moulded element (55) of transparent material enabling the display means to be read and surrounding the processing circuit and the display means.

2. The portable instrument of the preceding claim, wherein the position sensor (69) is inside the internal volume of the watertight housing.

3. The portable instrument of one of the preceding claims,
wherein the housing (50) is at least partly covered by an over-moulded non-transparent layer (54).

4. The portable instrument of one of the preceding claims,
wherein the housing is at least partly protected by a metallic plate (53).

5. The portable instrument of one of the preceding claims,
wherein said processing circuit (65) and/or said display means (63) and/or said position sensor (69) are mounted onto a printed circuit board fastened to the housing so as to make said internal volume watertight.

6. The portable instrument of one of the preceding claims, comprising a compartment (558) for a replaceable electric power source (69) closed in watertight manner by a detachable cover (58) comprising an electronic circuit (70).

7. The portable instrument of the preceding claim, wherein the housing (50) is at least partly covered by an over-moulded layer (54) integrating a joint making said detachable cover (58) of the battery compartment (558) watertight.

8. The portable instrument of one of the preceding claims,
wherein the position sensor (69) is a contactless sensor.

9. The portable instrument of the preceding claim, wherein said scale (40) has a grid of regions with determined magnetic characteristics and said sensor (69) is a sensor sensitive to the magnetic field.

10. The portable instrument of claim 8, wherein said scale (40) has a grid of regions with determined optical characteristics and said sensor (69) is an optical sensor.

11. The portable instrument of claim 8, wherein said scale (40) has a grid of regions with determined inductive or capacitive characteristics and said sensor (69) is an inductive or capacitive sensor.

12. The portable instrument of one of the preceding claims,
wherein said sensor (69) is sensitive to the linear or angular position of said scale.

13. The portable instrument of one of the preceding claims,
wherein the housing (50) comprises openings (536) for allowing control buttons (56) to pass and is at least partly covered by an over-moulded non-transparent layer (54) integrating said buttons and making said openings watertight.

14. The portable instrument of one of the preceding claims, constituting a slide calliper wherein said scale is fixedly united with a longitudinal shaft of said slide calliper and said housing is fastened on a slide arranged so as to slide longitudinally along the shaft.

15. The portable instrument of one of the claims 1 to 13, constituting a micrometre, wherein said scale is fixedly united with a feeler mobile relative to said housing.
